# EUROPEAN PATENT SPECIFICATION

(11) **EP 1 454 573 B1**
(45) Date of publication and mention of the grant of the patent: **24.05.2006**
(21) Application number: 04251280.6
(22) Date of filing: 05.03.2004
(51) Int. Cl.: A47J 27/21

(54) **Mounting components to electric heaters**
Befestigung von Bauelementen in einem elektrischen Heizgerät
Montage de composants dans un appareil de chauffage électrique

(30) Priority: 05.03.2003 GB 0305036
(43) Date of publication of application: 08.09.2004
(73) Proprietor: STRIX LIMITED, Ronaldsway, Isle of Man IM9 2RG (GB)
(72) Inventor: Scott, Michael James, Port St. Mary,Isle of Man IM9 5PH (GB)
(74) Representative: Leckey, David Herbert

(56) References cited:
- US-A- 6 153 859
- US-B1- 6 472 646

## Description

The present invention relates to electric liquid heating appliances and heaters therefor, and more particularly to mounting components to such heaters.

Liquid heating appliances such as kettles, hot water jugs, coffee makers and so on typically comprise a liquid heating chamber having a heated base provided with an electric heater. One form of heater is a sheathed electric heating element attached to the underside of the base, typically through a thermal diffusion plate. Another form of heater is a thick film heater having a thick film heating element formed on the underside of the base. The base may be an integral part of the chamber or a separate component suitably mounted to close an opening in the bottom of the heating chamber. Such heaters are shown in WO 96/18331. US 6153859 discloses a liquid heating vessel having a control unit mounted to the vessel base using screws which extend through bores on the control unit moulding into bores ont he vessel base.

It is necessary to mount various parts, such as electrical connectors and thermally sensitive controls, to the base. Typically these parts have plastics components which are potentially liable to thermal distortion and damage due to heat being transferred from the heater.

The present invention seeks to mitigate the above problem, and from a first aspect the invention provides a liquid heating appliance comprising a heating chamber having a base provided with an electric heater, a plastics component mounted to said base, said component having a mounting bore for receiving a fastener for mounting said component to said base, characterized by said bore being provided with a liner of a material of low thermal conductivity.

The invention also provides a plastics component for mounting to an electric heater for a liquid heating appliance characterized in that said component having a mounting bore with a low thermal conductivity liner.

Thus in accordance with the invention, the plastics component is provided with a mounting bore having a low thermal conductivity liner. The liner reduces the heat transfer into the component thereby reducing the likelihood of thermal damage to the component

By a low thermal conductivity is meant a thermal conductivity of less than 80 W/m/K, preferably less than 70 W/m/K, more preferably less than 40 W/m/K and most preferably less than 30 W/m/K . In one embodiment, the liner is made from a stainless steel. This material provides good thermal insulation having, typically, a thermal conductivity of 12.1 to 26.8 W/m/K, and also strength to the component. Other materials having a relatively low thermal conductivity, such as a mild steel (thermal conductivity of, typically, 45.2 to 65.3 W/m/K) or a ceramic material, could also be used

Preferably the liner extends along the complete length of the mounting bore. This prevents the component being crushed by the fastening means as it is tightened

The liner may even be slightly longer than the bore such that all the clamping forces are taken by the liner, rather than by the component.

The liner preferably extends substantially completely around the circumference of the bore.

The liner may be inserted into the mounting bore in any suitable manner. Typicaly however, the liner is press fitted or insert moulded into the bore.

A preferred embodiment of the invention will now be described with reference to the accompanying drawings in which:
Figure 1 shows a part of a component embodying the invention; and
Figure 2 shows a sectional view of Figure 1.

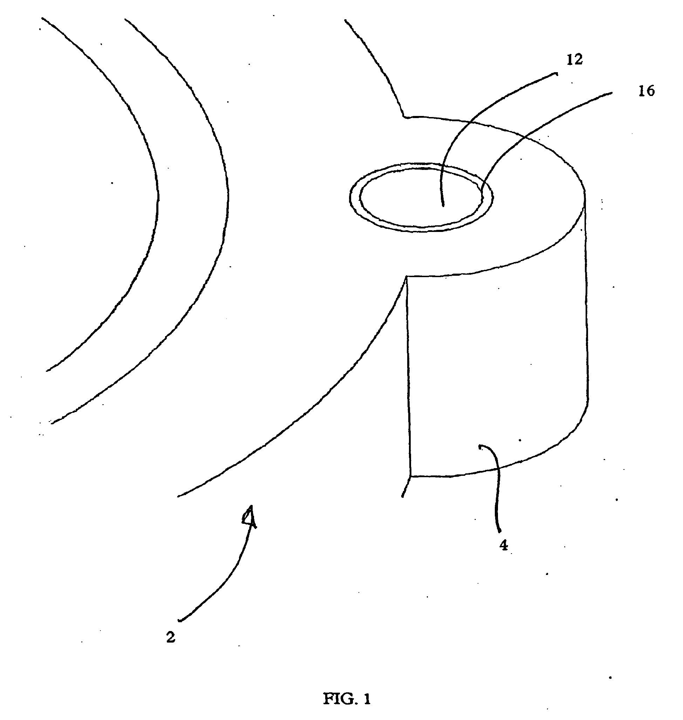

With reference to figure 1, a plastics component 2, such as the housing of a thermally sensitive control, cordless electrical connector or the like is provided with one or more peripheral mounting bosses 4 for mounting the component to underside of the heated base 6 of a liquid heating chamber of a liquid heating appliance. The base 6 may be provided with a thick film heater or a sheathed electric heater, as is well known in the art.

The component 2 is mounted to the base 6 by a stud 8 which is fixed to the base 6 by welding, brazing or some other suitable process. The stud 8 is provided with a threaded end 10 which extends through a mounting bore 12 provided in the component 2 and receives a clamping nut 14.

The plastics component is typically made from an engineering grade glass filled nylon and as such is susceptible to thermal distortion from heat Accordingly the mounting bore 12 is provided with a lining sleeve 16 of a stainless steel or other material of low thermal conductivity. In this embodiment, the bore is about 3.5 mm in diameter and the sleeve 0.3 mm thick.

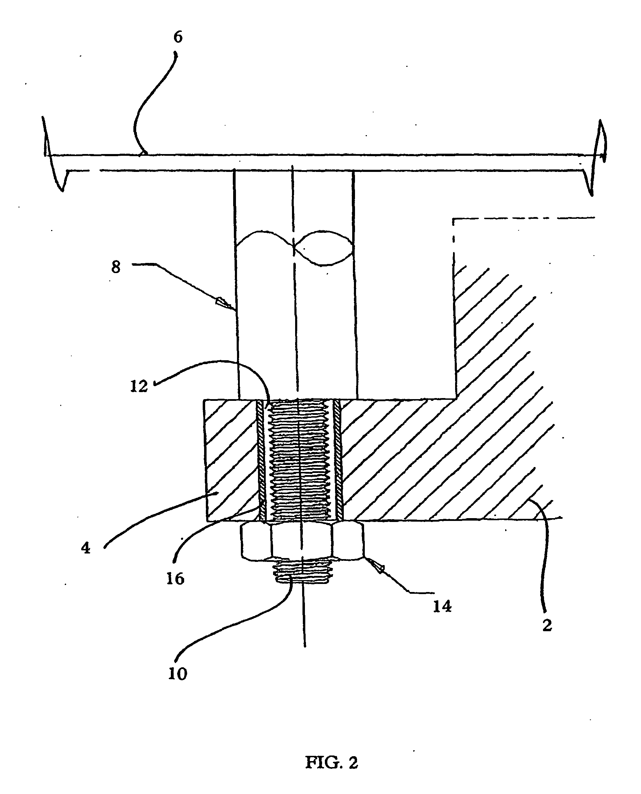

As can be seen from Figure 2, the sleeve 16 extends along the entire length of the mounting bore 12, such that the nut tightens down against the sleeve, preventing the boss 4 being crushed during tightening. Furthermore, due to the low thermal conductivity of the sleeve, heat flow into the component is reduced, thereby preventing thermal softening and distortion of the component which could loosen the mounting.

It will be appreciated that the component described above may be any component for mounting to a heater, such as a control and/or a connector housing. Also, the fastener may be other than the stud arrangement shown. For example a threaded fastener may engage in a threaded bore provided in the stud.

## Claims

1. A liquid heating appliance comprising a heating chamber having a base (6) provided with an electric heater, a plastics component (2) mounted to said base (6), said component (2) having a mounting bore (12) for receiving a fastener (8) for mounting said component (2) to said base, **characterized by** said bore being provided with a liner (16) of a material of low thermal conductivity.

2. A plastics component (2) for mounting to an electric heater for a liquid heating appliance, **characterised in that** said component has a mounting bore (12) with a low thermal conductivityliner (16).

3. An appliance or component as claimed in claim 1 or 2 wherein the thermal conductivity of the liner (16) is less than 80 W/m/K

4. An appliance or component as claimed in claim 3 wherein the thermal conductivity of the liner (16) is less than 70 W/m/K

5. An appliance or component as claimed in claim 4 wherein the thermal conductivity of the liner (16) is less than less than 40 W/m/K.

6. An appliance or component as claimed in claim 5 wherein the thermal conductivity of the liner (16) is less than 30 W/m/K.

7. An appliance or component as claimed in claim 1 or 2 wherein the liner (16) is made from stainless steel.

8. An appliance or componentas claimed in claim 1 or 2 wherein the liner (16) is made from mild steel.

9. An appliance or component as claimed in any preceding claim wherein the liner (16) extends substantially completely around the circumference of the bore (12).

10. An appliance or component as claimed in any preceding claim wherein the liner (16) is press fitted or insert moulded into the bore (12).

11. An appliance or component as claimed in any preceding claim wherein the liner (16) extends along the complete length of themounfuig bore (12).

12. An appliance or component as claimed in claim 11 wherein the liner (16) is longer than the bore (12) so as to extend therefrom

13. An electric heater for a liquid heating appliance having a component (2) as claimed in any of claims 2 to 12 mounted thereto.

## Patentansprüche

1. Flüssigkeitserwärmungsvorrichtung, die eine Heizkammer umfasst, welche eine Basis (6), die mit einer elektrischen Heizvorrichtung versehen ist, und ein an der Basis (6) montiertes Kunststoffbauteil (2) aufweist, wobei das Bauteil (2) eine Montagebohrung (12) zum Aufnehmen eines Befestigungselements (8) zum Montieren des Bauteils (2) an der Basis aufweist, **dadurch gekennzeichnet, dass** die Bohrung (12) mit einem Einsatz (16) aus einem Material mit geringer Wärmeleitfähigkeit versehen ist.

2. Kunststoffbauteil (2) für die Montage an einer elektrischen Heizvorrichtung für eine Flüssigkeitserwärmungsvorrichtung, **dadurch gekennzeichnet, dass** das Bauteil eine Montagebohrung (12) mit einem Einsatz (16) mit geringer Wärmeleitfähigkeit aufweist.

3. Vorrichtung oder Bauteil nach Anspruch 1 oder 2, wobei die Wärmeleitfähigkeit des Einsatzes (12) kleiner als 80 W/m/K ist.

4. Vorrichtung oder Bauteil nach Anspruch 3, wobei die Wärmeleitfähigkeit des Einsatzes (16) kleiner als 70 W/m/K ist.

5. Vorrichtung oder Bauteil nach Anspruch 4, wobei die Wärmeleitfähigkeit des Einsatzes (16) kleiner als 40 W/m/K ist.

6. Vorrichtung oder Bauteil nach Anspruch 5, wobei die Wärmeleitfähigkeit des Einsatzes (16) kleiner als 30 W/m/K ist.

7. Vorrichtung oder Bauteil nach Anspruch 1 oder 2, wobei der Einsatz (16) aus rostfreiem Stahl gefertigt ist.

8. Vorrichtung oder Bauteil nach Anspruch 1 oder 2, wobei der Einsatz (16) aus unlegiertem Stahl gefertigt ist.

9. Vorrichtung oder Bauteil nach irgendeinem der vorangehenden Ansprüche, wobei sich der Einsatz (16) im wesentlichen vollständig um den Umfang der Bohrung (12) erstreckt.

10. Vorrichtung oder Bauteil nach irgendeinem der vorangehenden Ansprüche, wobei der Einsatz (16) in die Bohrung (12) eingepresst oder eingespritzt ist.

11. Vorrichtung oder Bauteil nach irgendeinem der vorangehenden Ansprüche, wobei sich der Einsatz (16) über die komplette Länge der Montagebohrung (12) erstreckt.

12. Vorrichtung oder Bauteil nach Anspruch 11, wobei der Einsatz (16) länger als die Bohrung (12) ist, so dass er aus dieser hervorsteht.

13. Elektrische Heizvorrichtung für eine Flüssigkeitserwärmungsvorrichtung, mit einem daran montierten Bauteil (2) nach irgendeinem der Ansprüche 2 bis 12.

## Revendications

1. Appareil de chauffage de liquide comprenant une chambre de chauffage ayant une base (6) dotée d'un dispositif de chauffage électrique, un composant en matière plastique (2) fixé à ladite base (6), ledit composant (2) comportant un alésage de fixation (12) pour recevoir une pièce de fixation (8) pour fixer ledit composant (2) à ladite base, **caractérisé en ce que** ledit alésage (12) est doté d'une chemise (16) d'un matériau présentant une conductivité thermique faible.

2. Composant en matière plastique (2) pour fixer à un dispositif de chauffage électrique pour un appareil de chauffage de liquide, **caractérisé en ce que** ledit composant comporte un alésage de fixation (12) doté d'une chemise (16) de conductivité thermique faible.

3. Appareil ou composant selon la revendication 1 ou la revendication 2 dans lequel la conductivité thermique de la chemise (16) est inférieure à 80 W/m/K.

4. Appareil ou composant selon la revendication 3 dans lequel la conductivité thermique de la chemise (16) est inférieure à 70 W/m/K.

5. Appareil ou composant selon la revendication 4 dans lequel la conductivité thermique de la chemise (16) est inférieure à 40 W/m/K.

6. Appareil ou composant selon la revendication 5 dans lequel la conductivité thermique de la chemise (16) est inférieure à 30 W/m/K.

7. Appareil ou composant selon la revendication 1 ou la revendication 2 dans lequel la chemise (16) est faite en acier inoxydable.

8. Appareil ou composant selon la revendication 1 ou la revendication 2 dans lequel la chemise (16) est faite en acier doux.

9. Appareil ou composant selon l'une quelconque des revendications précédentes dans lequel la chemise (16) s'étend essentiellement et complètement autour de la circonférence de l'alésage (12).

10. Appareil ou composant selon l'une quelconque des revendications précédentes dans lequel la chemise (16) est ajusté avec serrage ou moulé par insertion dans l'alésage (12).

11. Appareil ou composant selon l'une quelconque des revendications précédentes dans lequel la chemise (16) s'étend sur la longueur totale de l'alésage de fixation (12).

12. Appareil ou composant selon la revendication 11 dans lequel la chemise (16) est plus longue que l'alésage (12) de manière à s'étendre à partir de celui-ci.

13. Dispositif de chauffage électrique pour un appareil de chauffage de liquide ayant un composant (2) selon l'une quelconque des revendications 2 à 12 fixé à celui-ci.
